# EUROPÄISCHE PATENTANMELDUNG

(11) **EP 1 065 780 A2**
(43) Veröffentlichungstag der Anmeldung: **03.01.2001**
(21) Anmeldenummer: 00108638.8
(22) Anmeldetag: 20.04.2000
(51) Int. Cl.: H02K 7/04

(54) **Dynamisch ausgewuchteter Elektrokleinmotor**

(30) Priorität: 02.07.1999 DE 19930602
(71) Anmelder: INTERELECTRIC AG, CH-6072 Sachseln (CH)
(72) Erfinder: Wolf, Peter, 6005 Luzern (CH); Teimel, Arnold, 6072 Sachseln (CH)
(74) Vertreter: Grünecker, Kinkeldey, Stockmair & Schwanhäusser Anwaltssozietät

(57) **Zusammenfassung**

Elektrokleinmotor mit einem Stator, einem Rotor mit Rotorwelle und einem vorstehenden Wellenende der Rotorwelle, auf dem ein anzutreibendes Element angeordnet ist. Ein solcher Elektrokleinmotor soll virbrationsärmer gestaltet werden. Hierzu ist das andere Wellenende der Rotorwelle ebenfalls als vorstehendes Wellenende ausgebildet und auf diesem anderen Wellenende ist ein Ausgleichskörper mit einer zum dynamischen Auswuchten des anzutreibenden Elementes vorgegebener Anordnung und Masseverteilung angeordnet.

## Beschreibung

Die vorliegende Erfindung betrifft einen Elektrokleinmotor mit einem Stator, einem Rotor mit Rotorwelle und einem vorstehenden Wellenende der Rotorwelle, auf dem ein anzutreibendes Element angeordnet ist. Ebenso bezieht sich die Erfindung auf ein Verfahren zum dynamischen Auswuchten eines solchen Elektromotors.

Insbesondere bei Einsatzfällen, bei denen durch Elektrokleinmotore relativ große Bauelemente rotiert werden sollen, können Vibrationen auftreten, die für bestimmte Anwendungsfälle nachteilig sind. Solche Probleme treten besonders dann auf, wenn die Bauelemente unmittelbar auf der Rotorwelle des Motors angeordnet sind und relativ flach ausgestaltet sind, aber einen großen Durchmesser aufweisen, der in vielen Fällen den Durchmesser des Motors übersteigt. Bei solchen Bauelementen kann es sich z.B. um Lüfterräder, Filterscheiben und jeglicher anderer Art von einem Elektromotor anzutreibenden Bauelementen handeln. Bei solchen im Verhältnis zur Baugröße des Elektromotors großen Bauelementen, die nur auf einem kleinen Bereich der Rotorwelle aufsitzen, spielen Planlauffehler eine sehr große Rolle bei der Erzeugung unliebsamer Vibrationen. Erschwerend kommt bei den meisten Anwendungsfällen noch hinzu, daß die von Elektrokleinmotoren erzeugten Drehzahlen oftmals sehr hoch sind, so daß sich eine Verstärkung der Vibrationen ergibt. Bei manchen Anwendungsfällen werden aus Platzgründen Flachmotoren eingesetzt, so daß das Auswuchten des Rotors aufgrund geringer Rotorlänge nicht möglich ist.

Es ist nunmehr die Aufgabe der vorliegenden Erfindung, einen Elektrokleinmotor der eingangs genannten Art bereitzustellen, der einen vibrationsärmeren Lauf hat.

Diese Aufgabe wird erfindungsgemäß dadurch gelöst, daß das andere Wellenende der Rotorwelle ebenfalls als vorstehendes Wellenende ausgebildet ist und auf diesem anderen Wellenende ein Ausgleichskörper mit einer zum dynamischen Auswuchten des anzutreibenden Elements vorgegebener Anordnung und Masseverteilung angeordnet ist. In allen bekannten Fällen, bei denen mittels Elektrokleinmotoren relativ große anzutreibende Elemente mit meist beträchtlicher Masse im Verhältnis zum Motor bewegt werden sollen, steht lediglich auf einer Seite ein Wellenende zum Anordnen dieses Elementes hervor. Es erscheint nunmehr sehr ungewöhnlich, auch auf der anderen Seite des Elektromotors, der bislang bei derartigen Motoren keine Funktion zugeordnet war und in aller Regel von einem Lagerschild verschlossen wurde, nunmehr ebenfalls ein vorstehendes Wellenende vorzusehen, auf dem ein Ausgleichskörper anbringbar ist. Oftmals spielen die beengten Einbauverhältnisse nur eine Rolle auf der Seite, auf der das anzutreibende Element, z.B. ein Lüfterrad, eine Filterplatte oder ähnliches, angeordnet ist. Auf der anderen Seite kommt den beengten Einbauverhältnissen oftmals eine geringere Bedeutung zu, so daß der Ausgleichskörper ebenfalls sehr groß und mit einer ausreichenden Masse ausgestattet werden kann. Dies ermöglicht ein sehr gutes dynamisches Auswuchten. Neben einem geräuschärmeren bzw. vibrationsärmeren Lauf, verringert sich auch die Lagerbelastung, was wiederum zu einer Erhöhung der Lebensdauer führt. Der Ausgleichskörper kann sowohl so ausgestattet sein, daß er zur Anbringung zusätzlicher Massen als auch zur Entfernung von Masseteilen geeignet ist. Durch eine solche Maßnahme ist es u.a. auch möglich, die größere Masse der anzutreibenden Elemente nochmals zu erhöhen. Auch läßt sich ein Planlauffehler des Rotors oder des auf dem Rotor angeordneten anzutreibenden Elements, der zu einer dynamischen Unwucht (Kreiselmoment) führt, durch das Wuchten in einer zweiten Ebene mit einer gewissen axialen Distanz sehr gut kompensieren. Der Planlauffehler mußte bei bislang verwendeten anzutreibenden Elementen sehr gering gehalten werden. Daraus ergaben sich hohe Anforderungen an die Fertigung dieser Teile und an die Montagevorrichtung. Hohe Herstellungskosten waren hiermit verbunden. Durch die Verwendung des Ausgleichskörpers kann die Anforderung bezüglich der Planlauffehlertoleranz geringer ausfallen, wodurch sich auch die Herstell- und Montagekosten des anzutreibenden Elements verringern lassen. Als vorstehendes Wellenende wird insbesondere ein über die Lagerstelle hinaus verlängertes Wellenende verstanden.

Besonders vorteilhaft wirkt sich die Erfindung gemäß einer Variante aus, bei der das anzutreibende Element ein scheibenförmiger Körper ist, dessen Durchmesser größer als der Durchmesser des Rotors oder des Stators ist. Bei solchen scheibenförmigen Körpern ist die mit der Rotorwelle in Kontakt kommende Fläche relativ gering, so daß es nicht zuletzt auch beim Montieren, z.B. Aufkleben, Aufpressen oder ähnlichen Montagemöglichkeiten, auf die Rotorwelle Planlauffehler erzeugt werden können. Ein dynamisches Auswuchten mittels eines Ausgleichskörpers geeigneter Größe ist für solche dünnen anzutreibenden Elemente großen Durchmessers sehr gut geeignet.

Die erwähnten Vorteile verstärken sich insbesondere bei Varianten, bei denen der Stator und der Rotor in Flachbauweise konstruiert sind. Solche als Flachmotoren (Pancake-Motors, Cup-Motors) bezeichnete Konstruktionen boten bislang keine Möglichkeit, Ausgleichskörper gleich welcher Art zu verwenden. Die ansonsten geschlossene Rückseite derartiger Motoren ist nunmehr gemäß der Erfindung von einem vorstehenden Wellenende zum Aufsetzen des Ausgleichskörpers durchbrochen.

Damit auch auf der Seite des Ausgleichskörpers möglichst geringe axiale Einbaulängen eingehalten werden können, kann der Ausgleichskörper bevorzugt eine Scheibenform aufweisen. Bei scheibenförmigen Ausgleichskörpern kann bereits durch geringe Veränderung der Anordnung und Masseverteilung ein geeignetes Ergebnis erzielt werden.

Günstigerweise kann der Ausgleichskörper aus einem Werkstoff mit hohem spezifischen Gewicht, wie Messing, Stahl oder Kupfer, hergestellt sein und die gezielte Masseverteilung mittels, insbesondere spanend hergestellten, Aussparungen erfolgen. Das bedeutet z.B., daß eine einfache Hülse auf der Rotorwelle verankerbar ist, die dann entsprechend der gewünschten Auswuchtung anschließend an bestimmten Stellen mit Aussparungen oder einer einzigen Aussparung versehen wird. Der Ort für die Aussparung läßt sich schnell mittels geeigneter Maschinen feststellen, die dann auch gleichzeitig die Einarbeitung der Aussparung vornehmen können.

Es besteht aber auch die Möglichkeit, daß der Ausgleichskörper als Trägerelement ausgestaltet ist, in oder an dem Ausgleichsgewichtsmassen angeordnet und/oder anbringbar sind. Die Ausgleichsgewichtsmassen können sowohl in ihrer Menge als auch an ihrem Ort variabel am Trägerelement anbringbar sein, damit die gewünschte Auswuchtung erfolgen kann. Die Abstufung der Ausgleichsgewichtmassen kann sehr fein erfolgen, so daß auch mit ausreichender Genauigkeit entsprechende Ergebnisse erzielbar sind.

Als Ausgleichsgewichtsmasse kann z.B. mindestens eine Paste mit geeignetem spezifischen Gewicht verwendet werden. Ist z.B. das Trägerelement als Hohlkörper mit verschiedenen Aufnahmekammern ausgestaltet, so können durch Einbringen von vorbestimmten Pasten mit jeweils geeignetem spezifischen Gewicht gezielte Auswuchtresultate erzielt werden. Die Zusammensetzung der Paste ergibt sich dann aus der erforderlichen Masse. Zuschlagstoffe, wie Metallpulver, können enthalten sein.

Es besteht aber auch die Möglichkeit, daß die Ausgleichsgewichtsmasse Metallkugeln umfaßt. Diese können auch in einer Paste angeordnet sein. Metallkugeln sind in unterschiedlichen Durchmessern erzeugbar und weisen entsprechend dem Werkstoff und der Größe ein bestimmtes Gewicht auf. Des weiteren können sie am Trägerelement vorpositioniert und durch geeignete Mittel für die Justierung verschoben werden, so daß unter Umständen lediglich ein Verlagern der Masse notwendig ist und nicht ein Hinzugeben oder Wegnehmen.

Bei einer besonders günstigen Ausgestaltung kann ein Gehäuse vorgesehen sein, die Wellenenden jeweils aus dem Gehäuse hervorstehen und das anzutreibende Element oder der Ausgleichskörper außerhalb des Gehäuses angeordnet sein. Bei der Konstruktion eines solchen Elektrokleinmotors ist lediglich darauf zu achten, daß auf der anderen Seite auch ein Wellenstummel übersteht, auf dem der Ausgleichskörper angeordnet werden kann. Zusätzliche Maßnahmen sind nicht erforderlich, so daß die ansonsten kompakte Bauform der Motoren beibehalten werden kann.

Obwohl als anzutreibende Elemente die unterschiedlichsten Montagekörper verwendbar sind, ist es gemäß einer Ausführungsform vorgesehen, daß dieses von einem Lüfterrad gebildet wird. Die Verwendung von Lüfterrädern ist weitverbreitet und deren Einsatzzwecke vielfältig. Nunmehr können durch relativ kleine Motoren relativ große Lüfterräder, ohne störende Einflüsse von Vibrationen, betrieben werden.

Es besteht aber auch die Möglichkeit, als anzutreibendes Element eine optische Filterscheibe zu verwenden. Solche Filterscheiben bestehen oftmals aus unterschiedlichen Materialien, die im Verbund angeordnet sind, so daß aufgrund der Produktionsweise immer mit einer Unwucht bzw. einem Planlauffehler zu rechnen ist. Dieser läßt sich durch den Ausgleichskörper ausreichend ausgleichen, so daß auch hier hohe Geschwindigkeiten gefahren werden können.

Des weiteren bezieht sich die Erfindung auf ein Verfahren zum dynamischen Auswuchten von Elektrokleinmotoren nach einem der Ansprüche 1 bis 11. Das Verfahren soll ein einfaches Auswuchten von Rotorwellen mit relativ großen anzutreibenden Elementen ermöglichen, ohne daß ein nachteiliger Eingriff auf die Konstruktion des Elektrokleinmotors vorzunehmen ist. Hierzu wird auf einem anderen vorstehenden Wellenende der Rotorwelle, das einen axialen Abstand von dem Wellenende mit dem anzutreibenden Element aufweist, ein Ausgleichselement angeordnet und durch Entfernen oder Anbringen oder Verlagern von mindestens einer Ausgleichsmasse am Ausgleichselement erfolgt ein dynamisches Auswuchten des gesamten Rotors. Das bedeutet, daß das Auswuchten jeweils jenseits bzw. außerhalb der Lagerstelle oder -stellen an den vorstehenden Endbereichen der Rotorwelle durchgeführt wird.

Bevorzugt erfolgt das dynamische Auswuchten bei im Stator angeordneten Rotor. Der Elektrokleinmotor ist demnach komplett einschließlich des anzutreibenden Elements montiert, so daß durch Aufschieben auf das gegenüberliegende, vorstehende Wellenende unzählige Möglichkeiten zur Anbringung und Ausgestaltung von Ausgleichskörpern (auch mehrerer Ausgleichskörper gleichzeitig) möglich ist. Dies vereinfacht das dynamische Auswuchten enorm. Unter Zuhilfenahme moderner Wuchtmaschinen läßt sich sehr schnell ermitteln, wo und mit welcher Masseverteilung der Ausgleichskörper auf dem Wellenende anzuordnen ist.

Günstigerweise kann das Entfernen der mindestens einen Ausgleichsmasse durch Materialabtrag am Ausgleichselement erfolgen. In solch einem Fall wäre es denkbar, daß auf das vorstehende Wellenende eine Metallhülse, z.B. aus Stahl, aufgepreßt oder aufgeklebt wird und nach anschließender Unwuchtbestimmung, wird an bestimmter Stelle eine Aussparung durch Bohren, Fräsen oder andere spanende Bearbeitung oder Erodieren usw. eingearbeitet.

Im folgenden werden anhand einer Zeichnung Ausführungsbeispiele der vorliegenden Erfindung näher erläutert. Es zeigen:
- Fig. 1: eine schematische Seitenansicht eines Flachmotors mit Ausgleichskörper und anzutreibenden Scheibenkörper und
- Fig. 2: eine schematische Seitenansicht eines konventionellen Kleinmotors mit Ausgleichskörper und anzutreibenden Scheibenkörper.

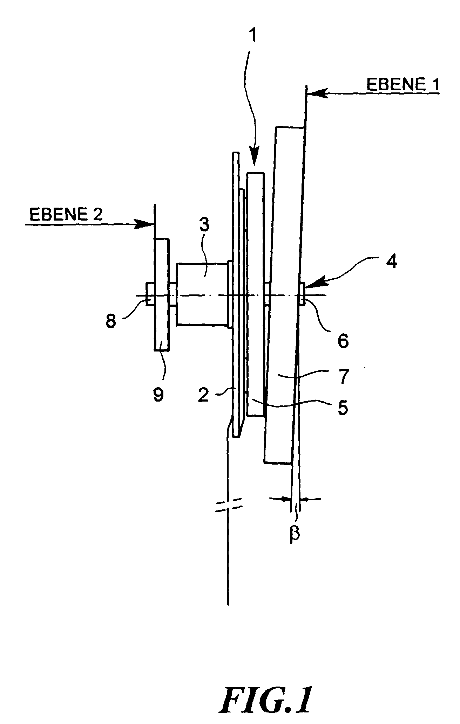

Der in Fig. 1 dargestellte Elektrokleinmotor umfaßt einen Rotor 1, der als Außenläufer ausgebildet ist, einen Stator 2, ein am Stator 2 angeordnetes Lagergehäuse 3 und eine Rotorwelle 4. Es handelt sich im vorliegenden Fall um die Konstruktion eines Flachmotors, da der elektrische Antriebsteil mit der Läuferscheibe 5 und dem Stator 2 eine relativ kleine axiale Länge aufweist. Die Läuferscheibe 5 umfaßt einen nicht näher dargestellten Dauermagnetring. Auf dem Stator 2 sind der Innenseite des Magnetrings zugeordnete Spulen angeordnet, die entsprechend mit einem gesteuerten Gleichstrom über eine Motorelektronik angesteuert werden.

Die Läuferscheibe 5 sitzt fest auf der Rotorwelle 4 auf, die sich durch das Lagergehäuse 3 erstreckt und dort bevorzugt in zwei voneinander beabstandet angeordneten Wälzkörperlagern gelagert ist. Die Rotorwelle 4 weist einen ersten vorstehenden Endbereich 6 auf, der zum Anordnen eines scheibenförmigen Zusatzelementes 7 dient. Bei diesem Zusatzelement 7 kann es sich um die unterschiedlichsten Bauteile, wie z.B. Lüfterräder, Filterscheiben oder ähnliches handeln. Die Erfindung soll jedoch nicht zwingend auf eine dieser Konstruktionen beschränkt werden, da ein dynamisches Auswuchten unabhängig von der Art des einzelnen Zusatzelementes 7 erfolgen kann. Bevorzugt erfolgt ein Aufpressen des Zusatzelementes 7 auf den ersten Endbereich 6.

Auf der gegenüberliegenden Seite steht aus dem Lagergehäuse 3 ein zweiter Endbereich 8 der Rotorwelle 4 hervor, auf dem ein scheibenförmiger Ausgleichskörper 9 angeordnet ist.

Bei dem Zusatzelement 7 handelt es sich im Verhältnis zum Elektrokleinmotor um ein relativ großes Bauteil von bedeutender Masse, weshalb ein Auswuchten unbedingt erforderlich ist. Bislang beschränkte man sich darauf, solche Elemente statisch auszuwuchten, was in aller Regel an den Zusatzelementen selbst erfolgte. In Fig. 1 ist zu erkennen, daß das Zusatzelement 7 auch einen Planlauffehler aufweisen kann, der durch den Winkel β in übertriebener Weise eingezeichnet ist. Ein in dieser Art angebrachtes Zusatzelement 7 kann zwar sehr einfach statisch ausgewuchtet werden, jedoch ergeben sich aufgrund relativ hoher Drehzahlen auch Belastungen bezüglich eines Kreiselmomentes, die zu Vibrationen führen können. Um dies ausgleichen zu können, ist der Ausgleichskörper 9 am Wellenende 8 angebracht.

Im folgenden wird nunmehr die Funktionsweise der Erfindung anhand des obigen Ausführungsbeispiels näher erläutert:

Für das dynamische Wuchten ist es von Bedeutung, daß der Ausgleichskörper 9 und das Zusatzelement 7 axial voneinander beabstandet auf der gleichen Rotorwelle 4 angeordnet sind, so daß zwei Massen in unterschiedlichen Ebenen angeordnet sind. Das Zusatzelement 7 ist in der Ebene 1 und der Ausgleichskörper 9 in der Ebene 2 angebracht. Der Ausgleichskörper 9 weist einen kleineren Durchmesser als der Rotor 1 und das Zusatzelement 7 auf und besteht aus einem Material mit relativ hohem spezifischen Gewicht. Im vorliegenden Fall wird eine Stahlscheibe als Ausgleichskörper 9 verwendet, die auf das Wellenende 8 aufgepreßt wird. Nach erfolgtem statischen Auswuchten erfolgt nunmehr das dynamische Auswuchten. Dies wird bevorzugt dadurch erzielt, daß an genau von entsprechenden Einrichtungen ermittelter Stelle Aussparungen in den Ausgleichskörper 9 eingearbeitet werden, so daß sich eine ungleiche Masseverteilung bzw. -anordnung an dem Ausgleichskörper 9 ergibt. Diese ungleiche Masseanordnung ist so, daß sie den Planlauffehler des Zusatzelementes 7 dynamisch ausgleicht. Das Abtragen von Werkstoff am Ausgleichskörper 9 bzw. Einarbeiten von Aussparungen kann mittels Fräsen oder ähnlichen spanenden oder abtragenden Verfahren erfolgen. Der Massenausgleich beim Wuchten kann sowohl stirnseitig als auch am Umfang des Ausgleichskörpers 9 erfolgen.

Des weiteren ist zu erkennen, daß die beiden gegeneinander auszugleichenden Massen der Elemente 7 und 9 jeweils ganz außen auf der Rotorwelle 4 aufsitzen und der eigentliche Antriebsbereich des Motors zwischen diesen beiden Elementen angeordnet ist. Durch die Verwendung des vorstehenden Endbereichs 8 kann der Ausgleichskörper 9 relativ groß ausfallen, wodurch sich ein sehr gutes Auswuchtverhalten ergibt. Wird die Masse des Ausgleichskörpers 9 ausreichend groß gewählt, kann vorab auch auf ein statisches Auswuchten verzichtet werden.

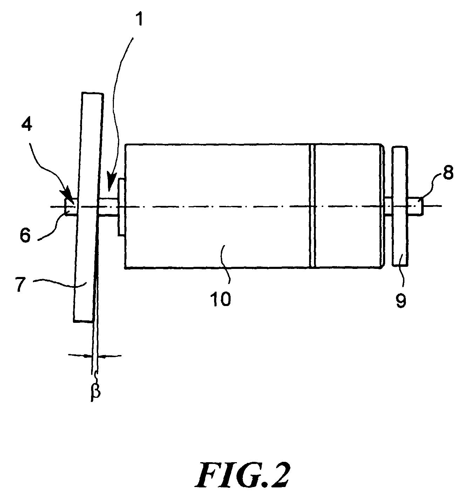

Im folgenden wird anhand der Fig. 2 ein zweites Ausführungsbeispiel der Erfindung näher erläutert.

Sofern gleiche oder gleichwirkende Bauelemente vorhanden sind, wird mittels gleicher Bezugsziffern auf die obige Beschreibung verwiesen. Maßgeblich wird nur auf die entscheidenden Unterschiede eingegangen.

Bei dem in Fig. 2 dargestellten Elektrokleinmotor handelt es sich um einen mit einem festen Statorgehäuse 10 umgebenen Rotor 1 mit nicht näher dargestelltem Innenläufer. Es kann sich hierbei um einen bürstenlosen Gleichstrommotor oder einen Glokkenankermotor handeln. Bei dieser Ausführungsform steht die Rotorwelle 4 jeweils auf beiden Seiten des Statorgehäuses 10 über, wobei auf einer Seite das Zusatzelement 7, z.B. ein Lüfterrad, angeordnet ist und auf der anderen Seite der scheibenförmige Ausgleichskörper 9. Auch hier wird mittels Einarbeiten von Aussparungen ein dynamisches Auswuchten, insbesondere des Planlauffehlers β des Zusatzelementes 7 vorgenommen. Durch eine solche Konstruktion ist es nicht mehr notwendig, zu hohe Fertigungsansprüche an die Zusatzelemente 7 zu stellen, da diese mit weniger Präzision gefertigt und auf das Wellenende 6 aufgebracht werden müssen. Dies senkt die Herstellungskosten ganz erheblich. Während der Ausgleichskörper 9 nur verhältnismäßig geringen Raum einnimmt, werden aber aufgrund seiner positiven Wirkung die Vibrationen während des Betriebs sehr stark herabgesetzt. Dies macht sich auch insbesondere hinsichtlich der Lebensdauer der Lager und der Geräuschentwicklung positiv bemerkbar, was teilweise sehr ausschlaggebend für den Kauf eines bestimmten Produktes ist, in dem ein solcher Elektrokleinmotor eingebaut ist.

Der Vorteil dieser Lösung besteht aber auch darin, daß der elektrische Antriebsbereich des Elektrokleinmotors nicht verändert werden braucht, um diese positiven Eigenschaften zu erzielen. Es muß lediglich eine längere Welle und ein Lagerschild mit einer Öffnung verwendet werden. Ein Einfluß auf die Wicklung und das Magnetsystem wird im wesentlichen ausgeschlossen.

Der in den Zeichnungen dargestellte Ausgleichskörper 9 soll sinnbildlich auch für alle anderen möglichen Ausführungsformen, wie z.B. Trägerelement mit zusätzlichen, veränderbaren Massenanteilen etc., stehen.

## Patentansprüche

1. Elektrokleinmotor mit einem Stator (2), einem Rotor (1) mit Rotorwelle (4) und einem vorstehenden Wellenende (6) der Rotorwelle (4), auf dem ein anzutreibendes Element (7) angeordnet ist, **dadurch gekennzeichnet,** daß das andere Wellenende (8) der Rotorwelle (4) ebenfalls als vorstehendes Wellenende ausgebildet ist und auf diesem anderen Wellenende (8) ein Ausgleichskörper (9) mit einer zum dynamischen Auswuchten des anzutreibenden Elementes (7) vorgegebener Anordnung und Masseverteilung angeordnet ist.

2. Elektrokleinmotor nach Anspruch 1, **dadurch gekennzeichnet,** daß das anzutreibende Element (7) ein scheibenförmiger Körper ist, dessen Durchmesser größer als der Durchmesser des Rotors (1) oder des Stators (2) ist.

3. Elektrokleinmotor nach Anspruch 1 oder 2, **dadurch gekennzeichnet,** daß der Stator (2) und der Rotor (1) in Flachbauweise konstruiert sind.

4. Elektrokleinmotor nach einem der Ansprüche 1 bis 3, **dadurch gekennzeichnet,** daß der Ausgleichskörper (9) eine Scheibenform aufweist.

5. Elektrokleinmotor nach einem der Ansprüche 1 bis 4, **dadurch gekennzeichnet,** daß der Ausgleichskörper (9) aus einem Werkstoff mit hohem spezifischen Gewicht, wie Messing, Stahl oder Kupfer, hergestellt ist und die gezielte Masseverteilung mittels, insbesondere spanend hergestellten, Aussparungen erfolgt.

6. Elektrokleinmotor nach einem der Ansprüche 1 bis 5, **dadurch gekennzeichnet,** daß der Ausgleichskörper (9) als Trägerelement ausgestaltet ist, in oder an dem Ausgleichsgewichtsmassen angeordnet und/oder anbringbar sind.

7. Elektrokleinmotor nach Anspruch 6, **dadurch gekennzeichnet,** daß die Ausgleichsgewichtsmasse durch mindestens eine Paste mit geeignetem spezifischen Gewicht gebildet ist.

8. Elektrokleinmotor nach Anspruch 6 oder 7, **dadurch gekennzeichnet,** daß die Ausgleichsgewichtsmasse Metallkugeln umfaßt.

9. Elektrokleinmotor nach einem der Ansprüche 1 bis 8, **dadurch gekennzeichnet,** daß ein Gehäuse (3,10) vorgesehen ist, die Wellenenden (6,8) jeweils aus dem Gehäuse (3,10) hervorstehen und das anzutreibende Element (7) und der Ausgleichskörper (9) außerhalb des Gehäuses (3,10) angeordnet sind.

10. Elektrokleinmotor nach einem der Ansprüche 1 bis 9, **dadurch gekennzeichnet,** daß das anzutreibende Element (7) ein Lüfterrad ist.

11. Elektrokleinmotor nach einem der Ansprüche 1 bis 10, **dadurch gekennzeichnet,** daß das anzutreibende Element (7) eine Filterscheibe ist.

12. Verfahren zum dynamischen Auswuchten von Elektrokleinmotoren nach einem der Ansprüche 1 bis 11, **dadurch gekennzeichnet,** daß auf dem anderen vorstehenden Wellenende (8) der Rotorwelle (4), das einen axialen Abstand von dem Wellenende (6) mit dem anzutreibenden Element (7) aufweist, ein Ausgleichskörper (9) angeordnet wird und durch Entfernen oder Anbringen oder Verlagern von mindestens einer Ausgleichsmasse am Ausgleichskörper (9) ein dynamisches Auswuchten des gesamten Rotors erfolgt.

13. Verfahren nach Anspruch 12, **dadurch gekennzeichnet,** daß das dynamsiche Auswuchten bei im Stator (2) angeordnetem Rotor (1) erfolgt.

14. Verfahren nach Anspruch 13, **dadurch gekennzeichnet,** daß das Entfernen der mindestens einen Ausgleichsmasse durch Materialabtrag am Ausgleichskörper (9) erfolgt.
